# EUROPEAN PATENT APPLICATION

(11) **EP 2 876 762 A1**
(43) Date of publication of application: **27.05.2015**
(21) Application number: 13819623.3
(22) Date of filing: 16.07.2013
(51) Int. Cl.: H02G 11/00, B60R 16/02

(54) **ARM POWER SUPPLY DEVICE**

(30) Priority: 17.07.2012 JP 2012158596
(71) Applicant: Yazaki Corporation, Minato-ku Tokyo 108-8333 (JP)
(72) Inventor: TERADA, Tomoyasu, Makinohara-shi Shizuoka 421-0407 (JP); SEKINO, Tsukasa, Makinohara-shi Shizuoka 421-0407 (JP); YAMASHITA, Hiroshi, Makinohara-shi Shizuoka 421-0407 (JP); OKAMOTO, Daisuke, Makinohara-shi Shizuoka 421-0407 (JP)
(74) Representative: Grünecker Patent- und Rechtsanwälte PartG mbB
(86) International application number: PCT/JP2013/069245
(87) International publication number: WO 2014/013966

(57) **Abstract**

An object is to prevent a wire harness from escaping from a second arm in a case where the wire harness is fixed only by a harness fixing portion on a rotation tip side of a second arm axially supported to a first arm. In order to achieve the obj ect, an arm power supply device (1), (1') includes a first arm (3), (3') configured to be axially supported to a base member (2) to be freely rotated, and a second arm (8) configured to be axially supported on the rotation tip side of the first arm to be freely rotated. The second arm includes a harness insertion groove (59) and a harness fixing portion (58) on the rotation tip side. The first arm includes a flange portion (60), (62) on the rotation tip side to prevent a harness covering a portion of the harness insertion groove on a rotational base end side from escaping. The flange portion (60) is formed in a longitudinal direction of the first arm (3) to protrude. The flange portion (62) is formed in a width integrally with a longitudinal direction and a width direction of the first arm (3').

## Description

### Technical Field

The present invention, for example, relates to an arm power supply device which is mounted on a sliding door of an automobile and wires a wire harness to a vehicle body side while supporting the wire harness by an arm to be freely rotated.

### Background Art

In an arm power supply device of the related art , for example, Patent Literature 1 (not illustrated) discloses a technology in which a link arm is axially supported to be freely rotated in a plate protector base which is vertically disposed in the sliding door of an automobile, the link arm is urged upward by a torsion coil spring, a harness holder is axially supported to be freely rotated in the link arm, the wire harness is wired from the sliding door side to the harness holder along the protector base in an approximate S shape, and thus the wire harness is wired from the harness holder to the vehicle body side.

The harness holder includes a holder base of an approximate rectangular shape and a holder cover which is about half the size of the holder base and is fixed by being screwed into a rotation tip (the first half) of the holder base. One end of the wire harness is fixed by a binding band to a rotational base end side of the holder base while being supported between the holder base and the holder cover, and the other end of the wire harness is fixed to the protector base. The protector base is fixed to a door inner panel, and the link arm and the harness holder rotate between the protector base and a door trim according to opening and closing of the sliding door.

### Citation List

### Patent Literature

Patent Literature 1: JP 2009-65814 A (Figs. 1 and 2)

### Summary of Invention

### Technical Problem

However, in the above arm power supply device of the related art, since the holder cover of the harness holder (a second arm) is sized as large as about the half of the holder base, the weight of the harness holder is increased, the harness holder may not smoothly rotate with respect to the link arm (a first arm).

Further, since the wire harness is fixed to the rotational base end side of the harness holder, the wire harness is bent in a small radius around the rotational base end side of the harness holder upon rotating of the harness holder and accordingly a major stress may be caused.

Then, in a case where the wire harness is not fixed to the rotational base end side of the harness holder but fixed only to the holder cover (a harness fixingportion) on the rotation tip side of the harness holder, the wire harness escapes from the holder base, and bent in a small radius from the holder cover to the protector base. Therefore, the wire harness may be adversely folded, and the wire harness may hang down to cause interference with peripheral components or the lower end of the door trim.

The invention has been made in view of the above circumstances, and an object is to provide an arm power supply device which can prevent the wire harness from escaping from the second arm even in a case where the wire harness is fixed only by the harness fixing portion of the second arm axially supported by the first arm on the rotation tip side.

### Solution to Problem

In order to achieve the above object, an arm power supply device of the invention according to claim 1 includes a first arm configured to be axially supported to a base member to be freely rotated, and a second arm configured to be axially supported on the rotation tip side of the first arm to be freely rotated. The second arm includes a harness insertion groove and a harness fixing portion on the rotation tip side. The first arm includes a flange portion on the rotation tip side to prevent a harness covering a portion of the harness insertion groove on a rotational base end side from escaping.

With the above configuration, when the second arm rotates with respect to the first arm, the flange portion of the first arm on the rotation tip side covers the harness insertion groove of the second arm to cause the outer peripheral surface of the wire harness inserted into the harness insertion groove to be in contact with the flange portion, so that the wire harness is prevented from escaping from the harness insertion groove. The wire harness is bent, for example, on the first arm through the harness insertion groove from the harness fixing portion of the second arm on the rotation tip side, and smoothly bent in a large radius.

The arm power supply device according to claim 2, in the arm power supply device described in claim 1, is characterized in that the flange portion is formed in a longitudinal direction of the first arm to protrude.

With the above configuration, the wire harness is effectively prevented from escaping from the harness insertion groove of the second arm by the flange portion which protrudes in the longitudinal direction of the first arm from the rotation tip of the first arm, and the rotation tip of the first arm is simply constructed and made smart.

The arm power supply device according to claim 3, in the arm power supply device described in claim 2, is characterized in that the flange portion is separated from the harness insertion groove in a state where the first arm and the second arm are positioned substantially in line.

With the above configuration, when the first arm and the second arm are positioned substantially in line, the flange portion of the first arm is released from covering the harness insertion groove of the second arm, and the harness insertion groove is open to the outside. In this state, the wire harness is inserted into the harness insertion groove in a radial direction.

The arm power supply device according to claim 4, in the arm power supply device described in claim 1, is characterized in that the flange portion is formed extensively and integrally in a longitudinal direction and a width direction of the first arm.

With the above configuration, in the entire rotational range of the second arm with respect to the first arm, the wide flange portion on the rotation tip side of the first arm completely covers the harness insertion groove of the second arm over the entire width without a gap, the wire harness is reliably prevented from escaping from the harness insertion groove. For example, the wire harness is inserted into the harness insertion groove (a space surrounded by the harness insertion groove and the flange portion) not in the radial direction but in the longitudinal direction.

### Advantageous Effects of Invention

According to the invention described in claim 1, in a case where the wire harness is fixed only by the harness fixing portion of the second arm on the rotation tip side, the wire harness is reliably prevented from escaping from the harness insertion groove of the second arm by the flange portion which is used for preventing the escape of the harness. Therefore, it is possible to prevent adverse deformation such as folding of the wire harness, and interference of the hanging-down wire harness with other accompanying components. Further, since the wire harness is fixed only by the harness fixing portion of the second arm on the rotation tip side, the wire harness is smoothly bent in a large radius in a leading direction along the second arm from the harness fixing portion, so that the bending resistance of the wire harness can be increased. Therefore, it is possible to increase reliability in power supply at all times.

According to the invention described in claim 2, the wire harness can be effectively prevented from escaping from the harness insertion groove of the second arm by the relatively small flange portion protruding in the longitudinal direction of the first arm, and the rotation tip of the first arm can be simply constructed and made smart.

According to the invention described in claim 3, the wire harness can be easily inserted into the harness insertion groove by releasing the harness insertion groove of the second arm in a state where the first arm and the second arm are extended substantially in line, and thus the power supply device can be easily assembled.

According to the invention described in claim 4, it is possible to reliably prevent the wire harness from escaping from the harness insertion groove of the second arm by the flange portion in the entire range of the rotation of the second arm with respect to the first arm.

### Brief Description of Drawings

Fig. 1 is a front view illustrating an embodiment of an arm power supply device according to the invention.
Fig. 2 is a plan view (top view) illustrating the arm power supply device.
Fig. 3 is a perspective view illustrating an aspect of a base member in an arm power supply device.
Fig. 4 is a perspective view illustrating an aspect of a first arm in the arm power supply device.
Fig. 5A and 5B illustrate the first arm in which Fig. 5A is a rear view of a relevant portion and Fig. 5B is a bottom view.
Fig. 6 is a front view illustrating an operation of the arm power supply device.
Fig. 7 is a front view illustrating another embodiment of the arm power supply device according to the invention.

### Description of Embodiments

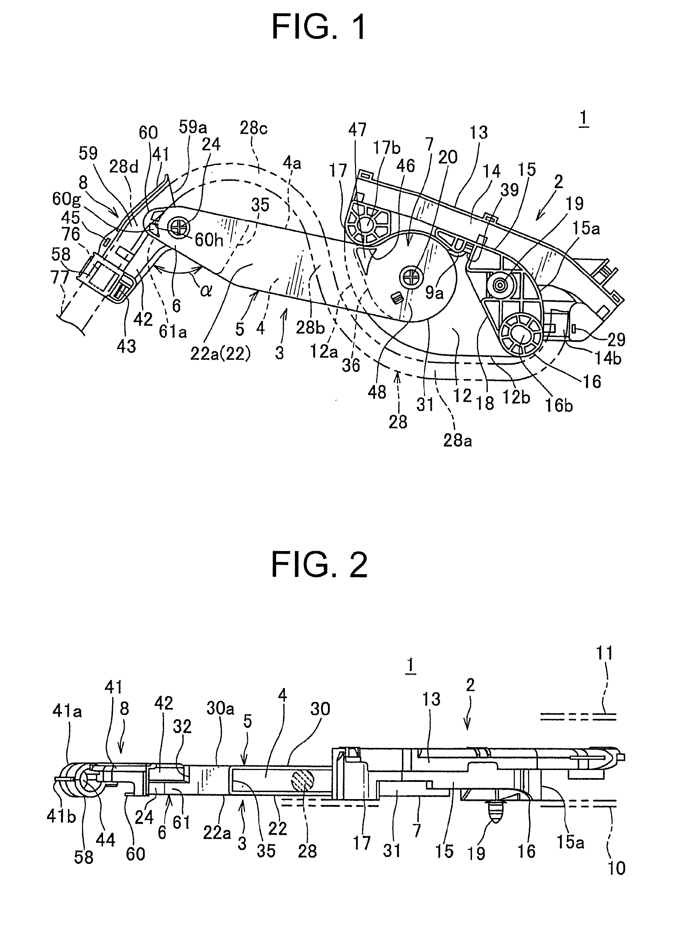

Figs. 1 and 2 illustrate an embodiment of an arm power supply device according to the invention.

The arm power supply device 1 is configured to include a small synthetic resin base member 2 which is vertically fixed to a metal door inner panel 10 (Fig. 2) of a sliding door of an automobile, a long synthetic resin first arm 3 which is rotatably and axially supported to the base member 2 in the upward and downward direction and has an enclosure portion 5 in the center forming a slit 4 for inserting a wire harness, and a short second arm 8 of a synthetic resin gutter which is rotatably and axially supported to a rotation tip 6 of the first arm 3 in the upward and downward direction and has a cover portion (a harness fixing portion) 58 on a rotation tip side of its own and a harness insertion groove 59 in a longitudinal direction. A flange portion 60 is formed on a rotation tip of the first arm 3 to protrude for preventing dropping-out of the harness so as to prevent a wire harness 28 from escaping from the harness insertion groove 59 of the second arm 8.

The arm power supply device 1 in this example is used for the sliding door on the left side of a vehicle, in Fig. 1, the front side indicates a vehicle outside (the door panel 10 side of Fig. 2) and the other side indicates a vehicle inside (a door trim 11 side of Fig. 2). The left side (the first arm 3 side) of Fig. 1 indicates the front side of the vehicle and the right side (the base member 2 side) indicates the back side of the vehicle. Figs. 1 and 2 illustrate a state in which the first arm 3 is urged upward by an urging force of the spring member

(a torsion coil spring) (not illustrated) on a rotational base end side 7 and an extra length of the harness is absorbed, at the time when the sliding door is half open.

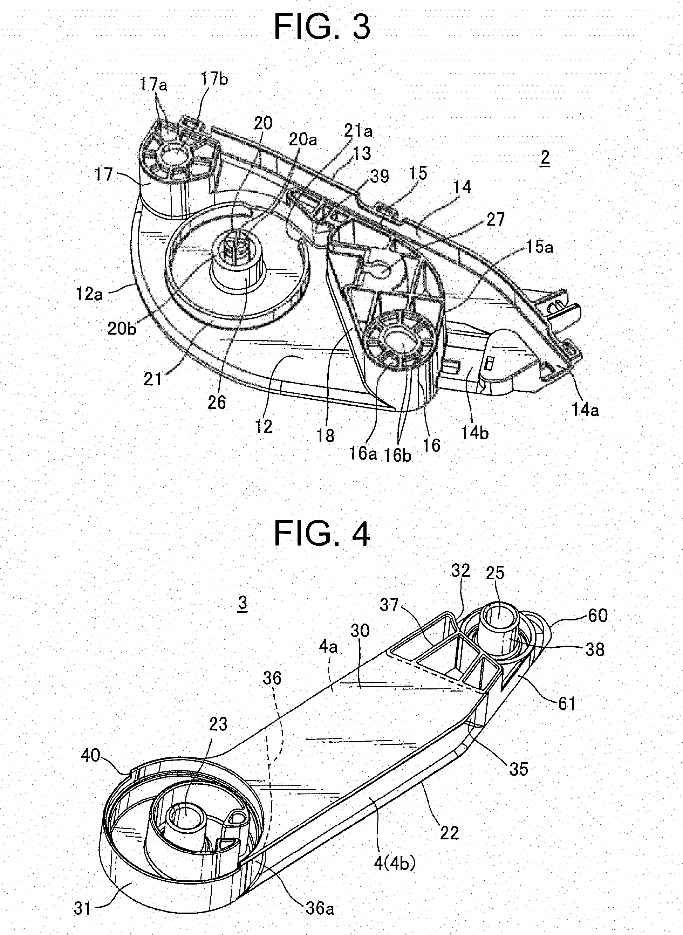

As illustrated in Figs. 1 and 2 , the base member 2 is formed to have a longitudinal length almost the same degree as the entire length of the first arm 3 and a vertical length almost twice times the width of the first arm 3, and is miniaturized in the longitudinal and vertical directions. The thickness of the base member 2 is almost one and half times the thickness of the first arm 3, and is compacted in the width direction. Fig. 3 illustrates an embodiment of the base member 2.

As illustrated in Figs. 1 and 3, the base member 2 includes a base plate 12 which is substantially perpendicular in the vertical direction, an upper wall 13 which is inclined downward along the upper end of the base plate 12, a partition wall 15 which is disposed below the upper wall 13 with a harness guide (insertion) path 14 formed therebetween, a bottomed cylindrical fixing portion 16 which is provided on the lower end side of a bent rear portion 15a of the partition wall 15, a bottomed cylindrical fixing portion 17 which is provided on the upper end side of the front part of the partition wall 15 and also serves as a stopper to regulate an upward rotation angle (the clockwise direction) of the first arm 3 (Fig. 1), an inclined wall 18 which is inclined upward from the fixing portion 16 on the lower side and serves as a stopper to regulate a downwardly rotation angle (the counterclockwise direction) of the first arm 3, a fixing clip 19 (Figs. 1 and 2) which is provided between the inclined wall 18 and the rear semi-bent portion 15a of the partition wall 15, a shaft 20 (Fig. 3) which protrudes from the base plate 12 and supports the first arm, and a guide wall 21 which is formed at a low height in a substantially annular shape.

The fixing portions 16 and 17 provided in the front and rear parts of the base member 2 respectively include bolt insertion holes 16b and 17b in bottom walls 16a and 17a. As illustrated in Fig. 2, the bottom walls 16a and 17a of the fixing portions 16 and 17 are in contact with the metal door inner panel 10 to be fastened and fixed by bolts and nuts (not illustrated), and the locking clip 19 passes through a hole (not illustrated) formed in the door inner panel 10 for engagement. The fixing portions 16 and 17 each protrude from the base plate 12 of the base member 2 toward the door inner panel 10, the rotational base end portion 7 in the annular shape (a circular shape in front view) of the first arm 3 is positioned in a nearly fan-shaped concave space (use symbol 12 in substitution) between the fixing portions 16 and 17 provided in the front and rear (upper and lower) parts along the base plate 12, and an outer surface 22 of the first arm 3 slightly recedes to the base plate 12 compared to the bottom walls 16a and 17a of the fixing portions 6 and 7.

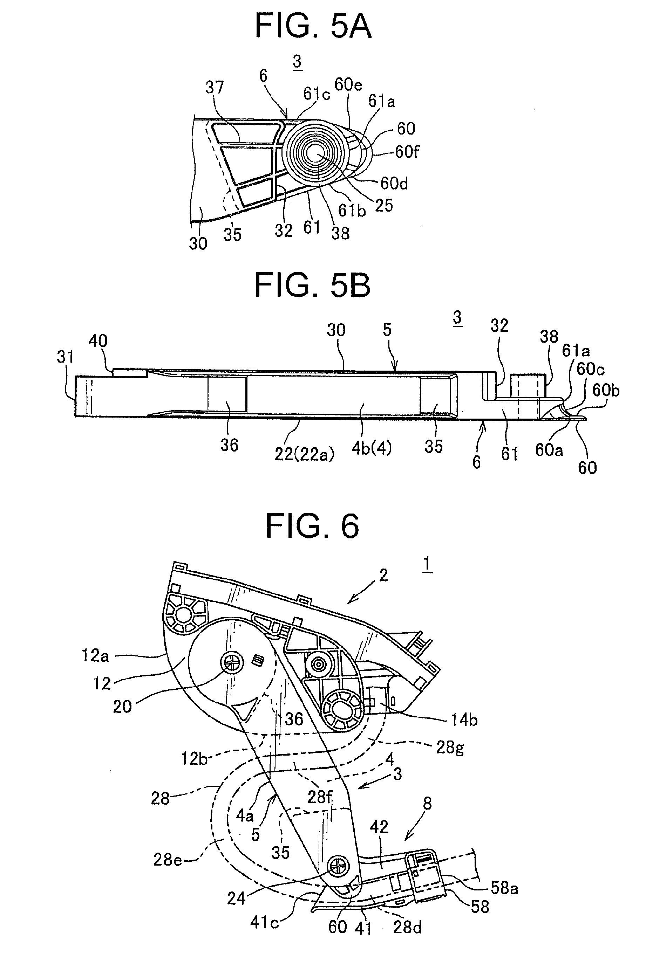

The shaft 20 of the base member 2 includes a slit 20a (Fig. 3) which is flexible inward in a radial direction, and has a locking claw 20b at the tip. At the time when the shaft passes through a hole portion 23 (Fig. 4) on the base end side of the first arm 3, the locking claw 20b (Fig. 3) is engaged with the peripheral of the hole portion 23. A shaft 24 provided in the second arm 8 (Fig. 1) is also configured to be engaged with a hole portion 25 (Fig. 5) on the tip side of the first arm 3. A cylindrical wall portion 26 is provided in the surrounding area of the shaft 20 (Fig. 3) of the base member 2, and a guide peripheral wall 21 is provided on the outside thereof. Symbol 27 denoted in Fig. 3 indicates a portion on which the locking clip 19 is mounted.

The harness guide path 14 (Fig. 3) of the base member 2 is vertically branched in a short distance on the rear end side (upper and lower branch passages are denoted by symbols 14a and 14b), and as illustrated in Fig. 1, a main body (denoted by symbol 28) of a wire harness 28 passes through the lower side slightly lower than the lower end of the base plate 12 of the base member 2 along the lower branch passage 14b from the harness guide path 14, and then wired along the second arm 8 through the slit 4 in the enclosure portion 5 of the first arm 3 while being bent in an approximate S shape.

The flange portion 60 on the rotation tip of the first arm 3 covers the harness insertion groove 59 on an upper end portion 59a side (the rotational base end side) of the harness insertion groove 59 of the second arm 8 and abuts (contact) on an outer peripheral surface of a wire harness portion 28d in the harness insertion groove 59, and prevents a wire harness 28 from escaping (clipping out) from the harness insertion groove 59. The flange portion 60 in Fig. 1 has a length about the half the inside width of the harness insertion groove 59 and covers an opening (use symbol 59 in substitution) on the outside of the vehicle of the harness insertion groove 59.

Therefore, the wire harness 28 fixed by a cover portion 58 on the rotation tip side of the second arm 8 passes downward through the slit 4 of the first arm 3 (the passing portion is denoted by symbol 28b) while being bent upward in a large radius from the second arm 8 (the upwardly bent portion is denoted by symbol 28c), is bent downward in a large radius to a harness fixing portion 14b on the rear end side of the base member 2 (the downwardly bent portion is denoted by symbol 28a), and thus keeps a substantially S shape smoothly bent in a large radius as a whole.

In a case where the flange portion 60 is not provided (a case where only the tip surface of the first arm 3 denoted by symbol 61a is provided), the wire harness portion 28d is clipped out along a tip surface 61a of an arc shape in plan view of the first arm 3 from the harness insertion groove 59 of the second arm 8 to the front side of the Fig. 1 (the outside of the vehicle), and an upwardly bent portion 28c of the wire harness 28 of Fig. 1 may be folded downward from the cover portion 58 on the rotation tip side of the second arm 8.

Since the flange portion 60 is provided, the folding of the wire harness 28 is prevented, the wire harness 28 is smoothly bent upward in a large radius from the rotation tip side 58 of the second arm 8, and the bending resistance of the wire harness 28 is improved. Specifically, the wire harness portion 28d is fixed to not the rotational base end side 59a of the second arm 8 but the rotation tip side 58, the wire harness 28 is smoothly bent along the bent shape of the second arm 8 (the bent shape about almost the center of the shaft 24), and the bent portion 28c is smoothly bent upward in a larger radium, so that the bending resistance of the wire harness 28 is increased. The flange portion 60 (Fig. 1) of the example includes two concave portions 60g up and down on the outer face (surface) side and a rib 60h at the center between the concave portions 60g, and thus is reinforced and reduced in weight.

One end of the wire harness 28 is wired from the harness guide path 14 toward the sliding door, and the other end of the wire harness 28 is wired up to a harness supporter (not illustrated) on a vehicle body side through the cover portion 58 on the rotation tip side of the second arm 8. The wire harness 28 is fixed by a binding band (not illustrated) in the branch passage (the harness fixing portion) 14b on the lower side of the harness guide path 14 (a band insertion hole is denoted by symbol 29), and is interposed and fixed by a cover portion (the harness fixing portion) 58 on a rotation tip side of the second arm 8.

The first arm 3 includes wall surfaces 22a and 30a (Fig. 2) which are flat and straight on front and back sides (outside and inside), an annular portion (the annular shape wall) 31 (Fig. 1) which is formed straight in the surrounding area of a circular wall portion 48 on the same plane as the wall surface 22a on the front side and has a depth equal to the interval of the wall surfaces 22a and 30a on the wall surface of the front and back, a portion on the rotation tip side 6 which is formed continuously on the same plane as the wall surface 22a on the front side and connected to the wall surface 30a on the back side through a step portion 32 (Fig. 2) while the tip width is tapered, the flange portion 60 which protrudes to the portion on the rotation tip side 6, the slit 4 which is formed between the annular portion 31 on the rotational base end side and the portion on the rotation tip side 6 to insert the harness between plate wall portions 22 and 30 forming the wall surfaces 22a and 30a on the front andback sides, plate inclined wall portions (the inclined walls) 3 5 and 3 6 which are formed in the front and rear parts and intersect with the plate wall portions 22 and 30 on the front and back sides to form the inner surfaces in the front and rear parts of the slit 4, and the enclosure portion 5 which is surrounded on all sides by the wall portions 22, 30, 35, and 36.

As illustrated in an embodiment of the first arm 3 in Figs. 4, 5(a), and 5(b), the flange portion 60 of a thin plate shape is further formed to protrude in a longitudinal direction of the first arm on the tip of a thin plate portion 61 having a thickness about the half or less in the step portion 32 on the rotation tip side of the first arm 3. As illustrated in Fig. 5 (b), the thickness of the flange portion 60 is about one fifth of the thickness of the plate portion 61. The outer surface (front surface) 60a of the flange portion 60 is positioned on the same plane as the wall surface 22a on the outside of the first arm 3, the inner surface (rear surface) 60b of the flange portion 60 smoothly intersects with the tip surface 61a of the plate portion 61 through a bent surface 60c. The bent surface 60c is smoothly in contact with the outer peripheral surface of the wire harness 28 which is inserted into the harness insertion groove 59 of the second arm 8 (Fig. 1).

As illustrated in Fig. 5(a), the tip surface 61a of the plate portion 61 is formed in the arc shape in plan view, and the flange portion 60 is formed to protrude in an elliptical semi-circle from the arc-shape tip surface 61a of the plate portion 61. The rotation tip side 6 of the first arm 3 of the example is tapered of f , one side portion 60d of the flange portion 60 is connected on the extension of an inclining surface 61b in one side portion on the rotation tip side 6, the other side portion 60e of the flange portion 60 is extended in an inclined shape from a straight surface 61c in the other side portion on the rotation tip side 6, and both side portions 60d and 60e in the inclined shape of the flange portion 60 are connected by a tip portion 60f in the bend shape. The flange portion 60 is formed thin as it goes to the peripheral ends 60d to 60f of almost the semi-elliptic shape, and as illustrated in Fig. 5(b) the peripheral ends 60d to 60f of almost the semi-elliptic shape protrude in an edge shape. A cylindrical bearing 38 which includes a hole portion 25 to axially support the second arm 8 in the substantially center portion of the plate portion 61 is formed to protrude toward the step portion 32 side.

Similarly to an embodiment of the first arm 3 illustrated in Figs. 4, 5(a), and 5(b), the slit 4 provided by being surrounded on all sides by the plate wall portions 22, 30, 35, and 36 front and back and let and right, that is, the enclosure portion 5 is formed in an approximate chevron shape (the taper shape) in vertically cross-sectional view such that an opening 4b on the lower end side is widened and an opening 4a on the upper end side is narrowed when the first arm 3 is substantially horizontally positioned. The slit 4 is formed by being surrounded by the plate wall portions 22 and 30 on the front and back sides and the plate inclined walls 35 and 36 for guiding the harness in the front and rear parts, which constitutes the enclosure portion 5.

The inclined wall 35 on the front side of the slit 4 is connected to the step wall 32 (Fig. 5) on the rotation tip side through a rib 37. An inclined wall 36 on the rear side (near the rotational base end) of the slit 4 includes an arc-shape wall portion 36a which is a part of the circular annular wall 31 on the rotational base end side and a straight wall portion (use symbol 36 in substitution) which is extended straight from the arc-shape wall portion 36a in a tangential direction. The inner surface of the inclined wall 36 on the rear side serves as a contact surface for guiding the wire harness 28. As illustrated in Fig. 1, on the narrow opening 4a side on the upper side of the slit 4, is formed a concave portion 47 having almost the triangle shape between the straight wall portion 36 and an annular wall 31 on the base end side.

As illustrated in Figs. 5(a) and 5(b), a cylindrical bearing member 38 is integrally provided in the plate portion 61 through the step portion 32 on the rear side of the rotation tip 6 of the first arm 3 to support the shaft 24 of the second arm 8 (Fig. 1) to be freely rotated. Further, as illustrated in Fig. 4, a notch portion 40 is provided in the latter half of the annular wall 31 on the rotational base end side of the first arm 3 such that one end portion 9a (Fig. 1) of the spring member (the torsion coil spring)(not illustrated) is made to protrude and thus engaged with a concave portion 39 of the partition wall 15 of the base member 2 of Fig. 1.

As illustrated in Figs. 1 and 2, since the wire harness 28 is inserted (passing through) into the slit 4 of the first arm 3, the wire harness 28 freely moves in the longitudinal direction of the first arm 3 when the first arm 3 rotates according to opening and closing of the sliding door, and the movement of the wire harness 28 to the width direction of the first arm 3 is prevented so that the trajectory of the wire harness 28 becomes stable. Therefore, small-radius bending and folding of the wire harness 28 is prevented, so that the bending resistance is improved.

Further, since the wall portion 22 on the front (outer) side of the enclosure portion 5 of the first arm 3 serves as a cover of the power supply device in the related art, the movement of the wire harness 28 to the outside of the vehicle is regulated (prevented) and the interference between a member (the door inner panel 10 and the like) on the outside of the vehicle and the wire harness 28. Therefore, the cover used in the related art becomes unnecessary, and the power supply device 1 is simplified, miniaturized, lowered in cost, and reduced in weight.

Further, as illustrated in Fig. 5, the enclosure portion 5 of the first arm 3 includes the plate wall portions 22 and 30 parallel to each other on right and left sides and the inclined walls 35 and 36 inclined in an approximate chevron shape (the taper shape) facing each other in the front and rear parts, and the rigidity of the first arm 3 is increased by the respective wall portions 22, 30, 35, and 36 which constitute the enclosure portion 5 and are integrally formed in a surrounding frame shape, and the first arm 3 is reduced in weight by the surrounding wall portions 22, 30, 35, and 36 which are made relatively thin. It is a matter of course that the first arm 3 is reduced in weight by forming the slit 4 surrounded by the enclosure portion 5.

Further, as illustrated in Fig. 1, the front end portion (the peripheral end) 12a of the vertical base plate 12 of the base member 2 forms the end portion in the bent shape with the shaft 20 of the first arm 3 as almost the center, and positioned in the vicinity of the inclined wall 36 on the rear side of the peripheral end portion 12a in the bent shape of the first arm 3(specifically, slightly protrudes forward from the inclined wall 36 on the rear side), and thus the base member 2 is shortened in the longitudinal direction compared to the related art. The bent end portion 12a slightly protrudes forward from the inclined wall 36 on the rear side, so that the rotational base end portion 7 is reliably supported (received) to the first arm 3 by the base plate 12 and the smooth rotation of the first arm 3 is reliably secured.

Further, similarly to the rotation state of the first arm 3 at the time when the sliding door is completely closed (when the sliding door is slid to the rear side of the vehicle) as illustrated in Fig. 6, an almost-horizontal lower end portion (the peripheral end) 12b formed continuously on the bent end portion (the peripheral end) 12a on the front side of the base plate 12 of the base member 2 is positioned in the vicinity of the lower end (the end portion on the narrow opening 4a of the slit 4) of the inclined wall 36 on the rotational base end side of the enclosure portion 5 of the first arm 3, so that the base member 2 is shortened even in the upward and downward direction compared to the related art.

As illustrated in Fig. 6, the first arm 3 rotates downward in the counterclockwise direction and the second arm 8 is substantially horizontally positioned below the base member 2, the flange portion 60 on the rotation tip of the first arm 3 covers the harness insertion groove 59 of the second arm 8, and thus similarly to Fig. 1 the clipping-out (falling-out) of the wire harness portion 28d from the second arm 8 is prevented. Therefore, the wire harness 28 is prevented from hanging down from the cover portion 58 of the second arm 8, and the lower side of the synthetic resin door trim (not illustrated) adjacent to the second arm 8 is prevented from being interfered with the wire harness 28.

As illustrated in Fig. 1, while being bent downward in the approximate semicircular shape from the harness fixing portion (the branch passage) 14b on a side near the rear portion of the base member 2, the wire harness 28 passes through the slit 4 in the enclosure portion 5 of the first arm 3 from the downwardly bent portion 28a (the harness insertion portion is denoted by symbol 28b) and bent upward in the approximate semicircular shape (the upwardly bent portion is denoted by symbol 28c), and is fixed by the binding band which is the harness fixing portion on the rotation tip side of the second arm 8 (the band insertion hole is denoted by symbol 45) and the cover portion 58 while being wired in the bent shape along the second arm 8 (the harness wired portion is denoted by symbol 28d).

As illustrated in Figs. 1 and 2, the second arm 8 is formed to have about the half or slightly shorter than the length of the first arm 3, and includes a bent gutter portion 41 which has the harness insertion groove 59 on the front side (the upper side), a base wall 42 which is approximately straight on the rear side (the lower side), the shaft 24 which protrudes to the base end side of the base wall 42, and the cover portion 58 having a semicircular shape in cross-sectional view which is provided to be opened and closed by a thin hinge 41b in a portion 41a (Fig. 2) having a semicircular shape in cross-sectional view on the rotation tip side of the gutter portion 41. The cover portion 58 is engaged with the base wall 42 in a state of being closed by an engagement means (a claw portion and a hole portion) 43. The gutter portion 41 is offset from the shaft 24 to the front side (the upper side). The peripheral surface of the rotational base end portion of the base wall 42 is formed in an arc shape (the arc-shape peripheral surface on the base end side in Fig. 2 is denoted by symbol 42).

The wire harness 28, for example, wraps the end portion of the corrugate tube 77 through a tape winding portion (not illustrated) on an outer peripheral side of the end portion of the mesh tube 76 to be interposed and fixed into the cover portion 58 in a state where a plurality of electric lines are covered with a small-radius synthetic resin mesh tube (protection tube) 76 having a good bending property in a range from the base member 2 to the cover portion 58 of the second arm 8 and the plurality of electric lines are covered with a large-radius synthetic resin corrugate tube (protection tube) 77 also in a range from the cover portion 58 to the harness supporter on a side near the vehicle body through a connection portion between the sliding door and the vehicle body. In the inner surface of the cover portion 58 and in the facing inner surface of the gutter portion 41, a sharp projection may be provided to pass and fix the end portion of the corrugate tube 77 and the tape winding portion of the end portion of the mesh tube 76. As illustrated in Fig. 2, the base wall 42 of the second arm 8 is positioned in the step portion 32 on the rotation tip side of the first arm 3, a circular harness insertion space 44 in the cover portion 58 is positioned collinearly (on a vertical plane) to the slit 4 for inserting the harness of the first arm 3, and the wire harness 28 is bent in the upward and downward direction without deviation in position in the right and left direction from the cover portion 58 to the slit 4.

Upon assembling the power supply device 1, the wire harness portion 28d is smoothly and easily inserted into the harness insertion groove 59 of the second arm 8 without interfering with the flange portion 60 of the tip of the first arm 3 in a state where the second arm 8 is rotated upward further more than the case of Fig. 1 to be positioned with the first arm 3 substantially in line (specifically, a state where the second arm rotates slightly downward in the counterclockwise direction from the first arm 3). The inclined side portion 60e on the upper side of the flange portion 60 of Fig. 5 (a) makes the insertion operation of the wire harness 28 into the harness insertion groove 59 easier.

In the above state, that is, a state where the first arm 3 and the second arm 8 are extended substantially in line, the wire harness 28 is pulled from the harness supporter (not illustrated) on a vehicle body (for example, when the sliding door is completely opened), so that there is no need to worry about that the wire harness portion 28d escapes from the harness insertion groove 59 of the second arm 8 even when the flange portion 60 is not provided.

After the wire harness portion 28d is inserted into the harness insertion groove 59 of the second arm 8, the second arm 8 is rotated downward in the counterclockwise direction as illustrated in Fig. 1, and thus in this state the flange portion 60 covers the harness insertion groove 59 to convey the power supply device 1 for example with the groove covered, so that the wire harness 28 is prevented from escaping from the harness insertion groove 59 at the time of the conveyance.

In a half-open state of the sliding door of Fig. 1, the first arm 3 is urged upward by an urging force of the spring member 9, the bent upper wall surface 46 on the front side formed continuously on the annular wall 31 on the base end side of the first arm 3 is in contact with the bent lower surface of the cylindrical fixing portion 17 on the front side of the base member 2, the upward rotation of the first arm 3 is prevented, the wire harness 28 is lifted up together with the first arm 3, and the bent harness portion 28a is prevented from being hanging down along the lower end 12b of the base member 2. The first arm 3 is slightly inclined upward from the horizontal level, the second arm 8 is inclined downward, and an angle α formed between both arms 3 and 8 becomes an obtuse angle of 90° or larger or an acute angle of 90° or smaller.

When the sliding door is further slid from the state of Fig. 1 to the rear side of the vehicle to be completely opened (the power supply device 1 retreats integrally with the sliding door), the wire harness 28 is pulled from the harness supporter (rotation clamp) (not illustrated) on the front side of the vehicle body with respect to the second arm 8, the second arm 8 rotates upward (the clockwise direction) about the shaft 24 on the base end side, the first arm 3 rotates downward (the counterclockwise direction) about the shaft 20 on the base end side, and both the arms 3 and 8 is extended on a substantially straight line.

At this time, the wire harness 28 is further extended in a straight line compared to Fig. 1, the harness portion 28b passed through in the slit 4 of the first arm 3 is in contact along the inclined wall 36 on the rear side of the slit 4 to be inclined upward, and the harness portion 28c on the upper side formed continuously on the inclined harness portion 28b and the harness portion 28a on the lower side are smoothly bent in a large radius, so that a small-radius bending which adversely affects the wire harness 28 is prevented.

When the sliding door is slid from the half-open state of Fig. 1 to the front side of the vehicle to be completely closed, as illustrated in Fig. 6, the wire harness 28 is pulled to the rear side from the harness supporter (not illustrated) on the rear side of the vehicle body, the first arm 3 rotates downward about the shaft 20 on the base end side (the counterclockwise direction), and the second arm 8 rotates about the shaft 24 on the base end side to be substantially horizontal and slightly upward (the counterclockwise direction) on the lower side of the first arm 3. For example, the harness supporter (not illustrated) on a side near the vehicle body is disposed to the rear side to be separated from a rotation tip 58a of the second arm 8 of Fig. 6 by a distance equal to about two or more times the entire lengthof the first arm 3 tobe substantially horizontal. The open angle formed between the both arms 3 and 8 in Fig. 6 is an obtuse angle of about 90°.

As illustrated in Fig. 6, the wire harness 28 is bent forward from a front end 41c of the gutter portion 41 of the second arm 8 (the forward bent portion is denoted by symbol 28e), passes through the slit 4 in the enclosure portion 5 of the first arm 3 (the insertion portion passing through the slit 4 is denoted by symbol 28f), bent upward on the rear side of the first arm 3 (the upwardly bent portion is denoted by symbol 28g), and connected to the harness fixing portion 14b on the lower rear side of the base member 2. In Fig. 6, the inclined wall 35 on the rotation tip side of the slit 4 of the first arm 3 is positioned substantially horizontal, and makes the wire harness 28 smoothly inserted in the slit 4 without causing interference with the inclined wall 35.

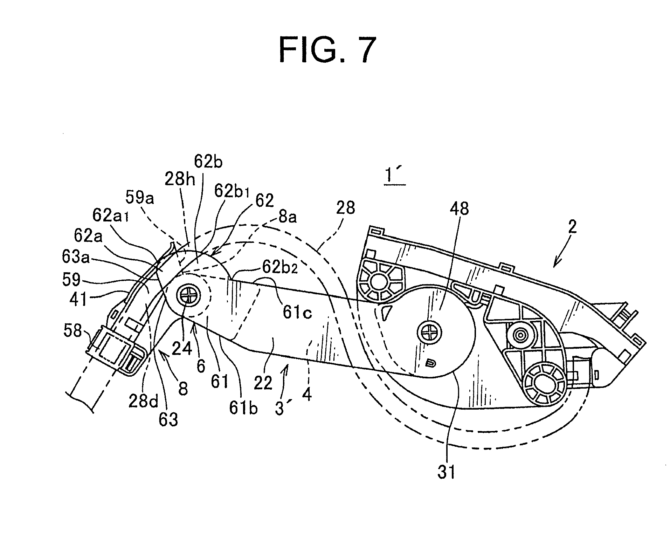

Fig. 7 illustrates another embodiment of the arm power supply device according to the invention. The arm power supply device 1' is characterized in that a flange portion 62 for preventing a harness from escaping which is larger than that in Fig. 1 on the rotation tip side of a first arm 3' is provided, and in Fig. 7, the base member 2, the second arm 8, and the wire harness 28 are the same as those in Fig. 1, the same components will be denoted with the same reference numerals and the descriptions thereof will not be repeated.

As illustrated in Fig. 7, the first arm 3' includes the wall portion 22 formed on the same plane (outer surface) side as that in Fig. 1, the wall portion (30) (not illustrated) on the rear surface (inner surface), the circular wall portion (bottom wall) 48 on the rotational base end side which is formed continuously to the same plane as the wall portion 22 on the front surface, the annular wall 31 formed to surround the wall portion, and the wall portion 61 which is on the rotation tip side and formed on the same plane as that of the wall portion 22 on the front surface. The flange portion 62 of a wide area in an approximate fan shape is provided on the rotation tip side (the longitudinal direction of the first arm) and on the upper end side (the width direction of the first arm) of the wall portion 61 on the rotation tip side.

In Fig. 7 (the half-open state of the sliding door), a flange portion 62a on the rotation tip side of the flange portion 62 protrudes widely in dimension of the inner width of the harness insertion groove 59 of the gutter portion 41 of the second arm 8, and completely covers the harness insertion groove 59 in a transverse direction without a gap, and causes the outer peripheral surface of the wire harness portion 28d inserted into the harness insertion groove 59 to reliably abut (contact) on the inner surface of the flange portion 62 in a range of the outer diameter of the wire harness portion 28d.

Further, the outer peripheral shape of a flange portion 62b is an arc shape on the upper end side of the flange portion 62. The flange portion almost completely covers a portion 8a of the second arm 8 on the rotational base end side (the upper end side), and covers and is in contact with a wire harness portion 28h derived from the rotational base end (the upper end) 59a of the harness insertion groove 59 of the second arm 8. Therefore, the clipping-out (escape) of the wire harness 28 from the harness insertion groove 59 is reliably prevented.

The rotation tip 6 of the first arm 3' includes the inclined side portion 63 which is near the lower side of the shaft 24 of the second arm 8 and has a large slope inclined forward upward from the inclined side portion 61b on the lower side, a portion 63a corresponding to the half of the inclined side portion 63 on the tip side forms a side portion of the flange portion 62, the one side portion 63a of the flange portion 62 is connected from a bent peripheral end 62a₁ of the flange portion 62a on the rotation tip side to an arc-shape peripheral end 62b₁ of the flange portion 62b on the upper side, and a rear end 62b₂ of the arc-shape peripheral end 62b₁ is continuously formed while intersecting with the straight side portion 61c on the upper side of the rotation tip 6 of the first arm 3'.

Even in a state where the first arm 3' of Fig. 7 is rotated downward in the counterclockwise direction to completely close the sliding door of the example of Fig. 6, similarly to Fig. 7, the wide flange portion 62 completely covers the harness insertion groove 59 of the second arm 8 in the transverse direction without a gap to be reliably in contact with the outer peripheral surface of the wire harness 28, so that the wire harness 28 is prevented from escaping from the harness insertion groove 59. Therefore, similarly to Fig. 6, interference between the wire harness 28 and the lower end of the door trim or other peripheral components is reliably prevented.

When the sliding door is slid forward from the half-open state of the sliding door of Fig. 7 to be completely opened, the first arm 3 ' rotates forward downward in the counterclockwise direction, and the second arm 8 is extended to be aligned substantially in line with the first arm 3', and even at a position of the arm rotation near that place including the above case, the flange portion 62 covers the harness insertion groove 59 of the second arm 8, so that the wire harness 28 is prevented from unexpectedly escaping from the harness insertion groove 59. With the inserting of the wire harness 28 into the harness insertion groove 59 of the second arm 8, for example, the wire harness 28 can be inserted in the longitudinal direction of the arm in a space having almost the rectangular shape in side view between the flange portion 62 of the first arm 3' and the gutter portion 41 of the second arm 8 in Fig. 7.

In addition, the embodiment has been described about the sliding door on the left side of the vehicle, and the sliding door on the right side of the vehicle has the same configurations and actions except that the arrangement is symmetrical to the sliding door on the left side. Further, the state when the sliding door is closed may be set to a state similar to a mirror-inverted (front and rear) state of Fig. 1, and the state when the sliding door is opened may be set to a state similar to a mirror-inverted (front and rear) state of Fig. 6.

Further, the arm power supply device may be applied to the sliding door of a vehicle other than that of automobile and the sliding door of an apparatus other than that of the vehicle. The sliding door is collectively referred to as a sliding structure, and the vehicle body and the apparatus body are collectively referred to as a fixed structure.

### Industrial Applicability

In a case where the wire harness is fixed only by the harness fixing portion on the rotation tip side of the second arm axially supported to the first arm, the arm power supply device according to the invention can prevent the wire harness from escaping from the second arm and be used to increase the bending resistance of the wire harness.

### Reference Sings List

- 1, 1':: Arm power supply device
- 2:: Base member
- 3, 3':: First arm
- 8:: Second arm
- 58:: Cover portion (harness fixing portion)
- 59:: Harness insertion groove
- 60, 62:: Flange portion

## Claims

1. An arm power supply device comprising:
a first arm configured to be axially supported to a base member to be freely rotated; and
a second arm configured to be axially supported on the rotation tip side of the first arm to be freely rotated,
wherein the second arm includes a harness insertion groove and a harness fixing portion on the rotation tip side, and
wherein the first arm includes a flange portion on the rotation tip side to prevent a harness covering a portion of the harness insertion groove on a rotational base end side from escaping.

2. The arm power supply device according to claim 1, wherein
the flange portion is formed in a longitudinal direction of the first arm to protrude.

3. The arm power supply device according to claim 2, wherein
the flange portion is separated from the harness insertion groove in a state where the first arm and the second arm are positioned substantially in line.

4. The arm power supply device according to claim 1, wherein
the flange portion is formed extensively and integrally in a longitudinal direction and a width direction of the first arm.
